# EUROPEAN PATENT APPLICATION

(11) **EP 1 296 501 A1**
(43) Date of publication of application: **26.03.2003**
(21) Application number: 02256523.8
(22) Date of filing: 20.09.2002
(51) Int. Cl.: H04M 1/725, H04M 1/64

(54) **Courtesy alerting feature for mobile electronic devices**

(30) Priority: 20.09.2001 US 956724
(71) Applicant: LUCENT TECHNOLOGIES INC., Murray Hill, New Jersey 07974-0636 (US)
(72) Inventor: Byers, Charles Calvin, Wheaton, Illinois 60187 (US); Heck, John Frederick, Wheaton, Illinois 60187 (US); Hinterlong, Stephen Joseph, Elburn, Illinois 60119 (US)
(74) Representative: Buckley, Christopher Simon Thirsk

(57) **Abstract**

The present invention provides a mobile electronic device and a method for providing a courtesy alerting feature. The mobile electronic device, such as a cellular phone, a pager, a PDA, or the like, receives a call request. If the user of the mobile electronic device wants to answer the call request but cannot do so immediately, the user can activate the courtesy alerting feature using an input device on the mobile device. The user presses a key or sequence of keys on the mobile device. A message is sent to the calling party alerting them that the user of the mobile device cannot currently answer the call but is moving to a place where the call request can be taken. Once in a location where the call can be taken, the user presses an answer button on the mobile device and the call is completed.

## Description

### Field Of The Invention

The present invention relates in general to mobile electronic devices, and in particular to responding to call requests at a mobile electronic device.

### Background Of The Invention

Mobile electronic devices, such as cellular telephones, Personal Digital Assistants (PDAs), and pagers, often need to inform their users of various real-time events. Examples of such events include an incoming telephone call, instant message, page, or timer alarm. Traditionally, the devices use audible signaling to alert the user that some action is required to service the event. Many devices have a menu-selected silent option that switches alerts from an audible signal to a vibration mode. Such a silent mode is valuable in social settings such as restaurants, theaters, courtrooms, and churches, where audible signaling would disturb bystanders.

Once an alert is received at a mobile electronic device, the user often can view a caller ID display on the device, and decide to take action (such as answer the call, return the page, or respond to an instant message). A difficulty arises when the call is important and the user would like to answer the call, but the user is in a setting where talking would be socially objectionable, or where privacy is unavailable. Often, it takes several minutes to move to an area where an important call can be answered. During this time, the caller may hang up, repeat a page, or log off an instant messaging system, causing the user to miss an opportunity to communicate with the caller. If the caller knew that the called party was going to be available to take the call in the near future, this missed opportunity could be avoided. It is common to observe users of mobile devices jumping up and running to the lobby in an often futile attempt to answer an important call before the caller hangs up.

Another important problem with mobile devices is the growing concern about using them while driving. Some jurisdictions are considering banning the use of handheld cellular telephones by the driver when a car is in motion. Users in these situations have no choice but to rely on their voice mail system to pick up a call, even though it would take less than a minute to pull over and take the call safely.

Therefore, a need exists for a method and mobile electronic device for allowing a user of a mobile electronic device to respond with a message to a call request discreetly without answering the call and without dropping the connection to the calling party.

### Brief Summary Of The Invention

The above problems can be overcome, and advance made in the art by providing a method and mobile electronic device that allows a user of a mobile electronic device, such as a cell phone, pager, or PDA, to send a courtesy alerting message to a caller when it is inopportune for the user to answer immediately the call request. The courtesy alerting feature is preferably a special button or menu selection on the mobile device that allows the user to answer the call in an inconspicuous manner. Upon depressing the special button or selecting the menu item, a courtesy alerting message, preferably a pre-recorded announcement, is sent from the mobile electronic device to the caller. The courtesy alerting message can be a default system message, can be prerecorded by the user of the mobile device, or can be a combination of the two. One embodiment includes having the user press a first button to activate the courtesy alerting feature and a second button to include in the courtesy alerting message a predetermined length of time estimate for how long the user estimates it will take to answer the call.

The pre-recorded announcement includes information from the user and can include a variety of statements, such as that the user is moving to an area where he or she can better accept the call, or asking the caller to hold for a moment.

The information from the user can be chosen using different menu entries or control buttons. One example is depressing a predetermined series of keystrokes on the mobile electronic device to give the caller an estimate of how long it will take to pick up the call. Processing of the courtesy alerting feature and storage of the announcements can be performed at either the mobile device or in the communication network.

Another aspect of the present invention involves the logic used to enable the courtesy alerting feature. Users can enable or disable the feature using a setup menu.

### Brief Description Of The Several Views Of The Drawings

FIG. 1 is a front mechanical view of a cellular telephone including a user interface in accordance with an exemplary embodiment of the present invention.

FIG. 2 is a flowchart describing the user interaction as alerts are received in accordance with an exemplary embodiment of the present invention.

FIG. 3 is a table depicting numeric keys and associated phrases in accordance with an exemplary embodiment of the present invention.

### Detailed Description Of The Invention

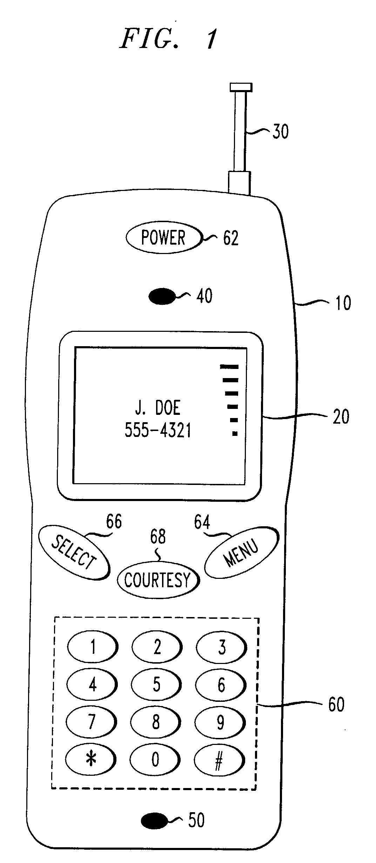

The present invention can be better understood with reference to FIGs. 1-3. FIG. 1 is a front mechanical view of a mobile electronic device 10. FIG. 1 depicts mobile device 10 as a cellular telephone, but it should be understood that the scope of this invention also applies to other mobile devices, such as pagers and Personal Digital Assistants.

Mobile device 10 includes display 20 for conveying information to the user, antenna 30 to support a radio link to wireless network infrastructure, speaker 40 to produce audio, microphone 50 to receive audio, and numeric keypad 60 to receive the user's numeric input.

Mobile device 10 also preferably includes a number of function keys, such as power key 62, menu key 64, select key 66, and courtesy alert control key 68. Power key 62 is used to toggle between standby and active modes. Menu key 64 invokes various menus on display 20 to configure and control the operation of mobile device 10. Select key 66 is used to choose various options from menus displayed on display 20. Numeric keypad 60, power key 62, menu key 64, select key 66, courtesy alert control key 68, and microphone 50 can be collectively referred to as an input device. Numeric keypad 60, power key 62, menu key 64, select key 66, and courtesy alert control key 68 accept input via depression of an individual key. Microphone 50 accepts input by receiving an audible response from a user of mobile device 10 and processing the audible input. This can be accomplished using a speech-to-text converter, voice recognition processing, or other methods of utilizing speech for input.

In operation, the user enables mobile electronic device 10 by depressing power key 62. Various setup and configuration commands are entered using menu key 64 and select key 66 while observing prompts on display 20. Numeric inputs, such as dialed numbers, are entered on numeric keypad 60. Once a call is originated, the user speaks into microphone 50 and listens through speaker 40. Antenna 30, in conjunction with circuitry internal to device 10 (such as radio transmitters and receivers, amplifiers, processors, interfaces and Digital Signal Processors, not shown), provides a radio interface to the base stations and the rest of the mobile network, also not shown.

Courtesy Alert control key 68 is depressed to invoke the courtesy alert feature if an incoming call is received, and the user of device 10 wants to defer answering the call. Courtesy Alert Control key 68 is preferably interrogated by the control processor internal to device 10 periodically until its operation is detected. Once the depression of Courtesy Alert control key 68 is detected, control logic internal to device 10 responds as described in detail below. This represents a new control capability for mobile devices.

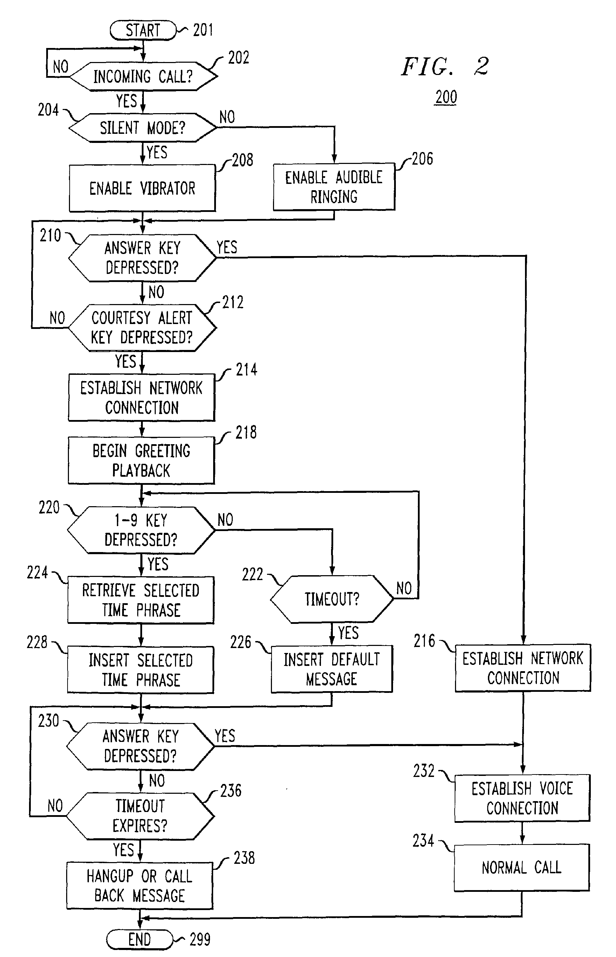

FIG. 2 is a flowchart 200 of the courtesy alert feature in operation. Starting at 201, the control logic waits for an incoming call. When a call is detected in block 202, a decision is made in 204 whether to alert the user with an audible ring signal in action block 206, or to enable the silent mode vibrator in block 208. Although not shown, caller ID on display 20 is also populated during this phase.

A loop is now entered waiting for the user to respond to the call in one of two ways. If the user chooses to answer the call immediately, decision block 210 will detect this event. Block 210 represents the typical control flow of cellular telephones today. If the user instead decides to invoke the courtesy alerting feature, decision block 212 will detect the depression of the special courtesy key (68 on FIG. 1). Control will loop through 210 and 212 until one of the two buttons is depressed, the caller hangs up, or the network answer timer expires and the network redirects the call to a voicemail system.

If activation of the courtesy alerting button is detected in 212, a network connection for call control is established in block 214 through signaling channels. The voice connection is not connected to the mobile device's microphone, however. The voice transmit channel is instead connected to a stored message playback unit, which begins playing audio through the network to the caller. The stored message playback unit may retrieve voice samples from a database storage capability (Random Access Memory (RAM), Flash memory, or Disk), uncompress them if necessary, and play the resulting audio samples over the network connection. Using text-to-speech synthesis is an alternate embodiment for this aspect of the invention.

The content of the audio message may be a default audio sample provided by the network, or be pre-recorded by the user, much like a voice mail greeting. Typical messages include content such as: "The mobile user you are calling has activated the courtesy alert feature. Please stay on the line, and he or she will be able to take your call in a few moments".

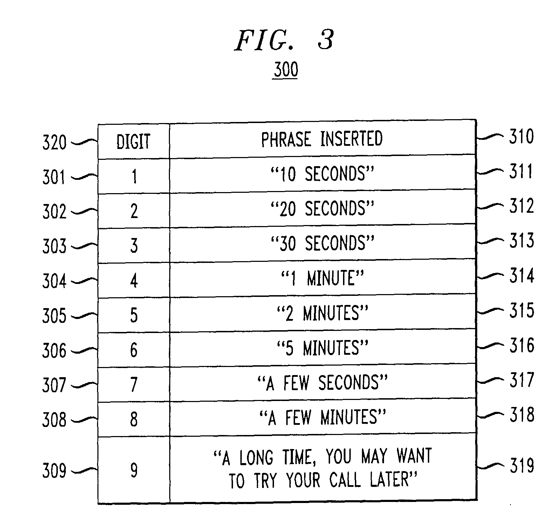

In decision block 220, depression of a button on the numeric keypad is detected. In this exemplary embodiment, the user can insert one of several pre-recorded time phrases in place of the "in a few moments" phrase used in the above example message. This allows the mobile user to give the caller a better idea of how long it is estimated until the call will be answered. In this exemplary embodiment, up to nine different phrases can be associated with the numeric keys 1-9. Examples of such phrases are shown in FIG. 3.

FIG. 3 depicts a table 300 of phrases that can be associated with numeric keys in accordance with the present invention. Column 320 depicts the digit selected, and column 310 depicts the phrase that will be inserted in the courtesy alerting message. For example, if digit "1" (301) is pressed, the phrase "10 seconds" (311) will be inserted in the courtesy alerting message. For example, if the user receives a call request and presses the courtesy alert control key followed by the "1" key, the following message will preferably be played: "The mobile user you are calling has activated the courtesy alert feature. Please stay on the line, and he or she will be able to take your call in 10 seconds."

Similarly, if any of keys 2-9 (302-309) are pressed following the courtesy alert control key, the prerecorded message (312-319) will be inserted into the courtesy alerting message. It should be appreciated that different messages can be used as defaults, and users can pre-record custom messages.

Returning now to FIG. 2, if no numeric key is detected in block 220, block 222 determines if a timeout timer has expired. Timeout occurs just before the stored message playback unit needs to play the last phrase of the outgoing message. In case of a timeout, block 226 inserts the default message and the default message, (without precise time statements), is played to completion.

If decision 220 detects a numeric key, a database is consulted and the voice sample associated with that key is retrieved in action block 224, and inserted in block 228. These phrases could be provided as defaults, or individually prerecorded by the user.

In decision 230, the mobile device places the caller on hold, and waits for the user to move to a location where it would be appropriate to take the call, and press a key to answer the call (typically any key on the keyboard). If an answer key is not depressed in decision block 230, a decision is made at box 236 as to whether a timeout timer has expired. The timeout timer is set to a time such that if the user has not answered the call prior to the expiration of the timeout timer, a message is played in action block 238 to the calling party indicating that the mobile device has failed to answer the call request and the call will either be disconnected or instructed to callback at a later time. Alternately, the caller could be directed to voice mail or could be given a choice as to whether to disconnect, go to the mobile device's voice mailbox, or initiate a second call request to the mobile device. The process then ends 299.

If an answer key is detected in decision block 230, call control re-converges with the answer path from decision 210, which has a side effect of establishing a supervisory connection in action block 216. Block 232 establishes a voice connection between the network and the speaker and microphone of the mobile device. In block 234, a traditional mobile call is carried out. The control flow ends upon termination of the call in 299.

In the preferred embodiment, the control logic, voice storage, and stored message playback unit are all included in the mobile device. This allows the courtesy alerting feature to be included in mobile devices without changing the network that they connect to. In an alternate embodiment, some or all of the capabilities needed to implement this feature are contained in the network. Although more detailed than the preferred embodiment, all existing mobile devices could have access to the courtesy alerting feature without modification.

In the exemplary embodiment described above, the mobile device was described as a cellular telephone and voice telephony services. The present invention also applies to pagers, two-way pagers, and Personal Digital Assistants with instant messaging services. In some social settings, it is awkward for a user of a mobile electronic device to answer a call request immediately. In addition, some senders of instant messages expect replies to their messages in the space of a minute, and if the social setting will not permit the device's user to enter a full message that rapidly, the courtesy alerting feature can be provided. In this case there is a simple to access button, keystroke, pen stroke, or menu item that lets the user tell the sender of a message that a response will arrive in a short time.

While this invention has been described in terms of certain examples thereof, it is not intended that it be limited to the above description, but rather only to the extent set forth in the claims that follow.

## Claims

1. A method for sending a courtesy alerting message from a mobile electronic device in response to a call request, the mobile electronic device comprising an input device, the method comprising the steps of:
receiving an incoming call request at the mobile electronic device;
activating a courtesy alerting feature via the input device; and
sending a courtesy alerting message from the mobile electronic device.

2. A method for sending a courtesy alerting message in accordance with claim 1, wherein the step of sending a courtesy alerting message comprises sending a default courtesy alerting message.

3. A method for sending a courtesy alerting message in accordance with claim 2, wherein the step of sending a default courtesy alerting message comprises sending a default courtesy alerting message upon the expiration of a timeout timer.

4. A method for sending a courtesy alerting message in accordance with claim 1, wherein the step of sending a courtesy alerting message comprises sending a prerecorded courtesy alerting message.

5. A method for sending a courtesy alerting message in accordance with claim 1, wherein the courtesy alerting message comprises the estimated time to answer the call.

6. A mobile electronic device for sending a courtesy alerting message in response to a call request, the mobile electronic device comprising:
a receiver for receiving an incoming call request; an input device for inputting a command into the mobile electronic device; a processor for activating a courtesy alerting feature in response to the command; and a transmitter for sending a courtesy alerting message from the mobile electronic device.

7. A mobile electronic device in accordance with claim 6, wherein the transmitter sends a default courtesy alerting message.

8. A mobile electronic device in accordance with claim 7, wherein the transmitter sends the default courtesy alerting message upon the expiration of a timeout timer.

9. A mobile electronic device in accordance with claim 6, wherein the transmitter sends a prerecorded courtesy alerting message.

10. A mobile electronic device in accordance with claim 6, wherein the transmitter sends a courtesy alerting message including the estimated time to answer the call.
